# FASCICULE DE BREVET EUROPEEN

(11) **EP 2 296 917 B1**
(45) Date de publication et mention de la délivrance du brevet: **28.12.2011**
(21) Numéro de dépôt: 09772497.5
(22) Date de dépôt: 02.07.2009
(51) Int. Cl.: B60C 11/12

(54) **BANDE DE ROULEMENT DIRECTIONNELLE POUR PNEU POURVUE D'INCISIONS ADAPTEES.**
DIREKTIONALES REIFENPROFIL MIT EINGEPASSTEN KERBUNGEN
DIRECTIONAL TIRE TREAD PROVIDED WITH FITTED INCISIONS

(30) Priorité: 03.07.2008 FR 0854517
(43) Date de publication de la demande: 23.03.2011
(73) Titulaire: Société de Technologie MICHELIN, 63000 Clermont-Ferrand (FR); MICHELIN Recherche et Technique S.A., 1763 Granges-Paccot (CH)
(72) Inventeur: BERGER, Eric, F-63410 Loubeyrat (FR); FUGIER, Sébastien, F-63200 Saint Bonnet Près Riom (FR); BONNAMOUR, Matthieu, F-63430 Pont du Château (FR); AUDEBERT, Claude, F-63720 Les Martres sur Morge (FR)
(74) Mandataire: Diernaz, Christian
(86) Numéro de dépôt international: PCT/EP2009/058319
(87) Numéro de publication internationale: WO 2010/000797

(56) Documents cités:
- EP-A- 0 810 104
- EP-A- 0 846 578
- EP-A- 1 170 153
- WO-A-94/21478
- US-A- 5 127 455
- US-A1- 2002 166 613

## Description

La présente invention concerne les bandes de roulement de pneu et plus particulièrement les bandes de roulement comprenant des éléments de relief pourvus d'incisions.

Une bande de roulement pour pneumatique comprend une surface de roulement formée d'une pluralité de faces de contact d'éléments de reliefs délimités par des rainures. Ces rainures sont utiles notamment pour permettre un drainage efficace de l'eau présente sur la chaussée pendant le roulage d'un pneu pourvu de cette bande de roulement.

Pour améliorer la performance d'une bande de roulement sur chaussée revêtue d'eau, il est connu de pourvoir cette bande de roulement avec une pluralité d'incisions. Une incision est un espace délimité par deux parois de matière situées en vis-à-vis et suffisamment proches l'une de l'autre pour permettre éventuellement un contact entre lesdites parois au passage dans le contact avec la chaussée. En règle générale, les incisions ont une largeur inférieure ou égale à 2 mm et préférentiellement inférieure à 1mm. Ces incisions s'étendent dans la direction de l'épaisseur de la bande.

Les incisions présentent l'intérêt de créer des arêtes additionnelles sur la surface de roulement afin de couper le film d'eau présent sur la chaussée et ainsi obtenir un contact entre la bande de roulement et la chaussée, ce qui est bénéfique en terme de performance.

Il est en outre connu de former des incisions avec des parois en vis-à-vis pouvant interagir l'une avec l'autre afin de limiter la réduction de rigidité liée à la présence même des incisions. Il est notamment connu de former sur chacune des parois en vis-à-vis des reliefs pouvant coopérer entre eux de manière à limiter les mouvements d'une paroi par rapport à l'autre.

En fonctionnement usuel sur un véhicule, le pneu et donc sa bande de roulement est soumis à des forces qui sont : soit de nature motrice (permettant de faire avancer un véhicule), soit de nature freineuse (pour réduire la vitesse d'un véhicule). Afin d'adapter au mieux la bande de roulement à ces efforts, il est connu d'incliner les incisions selon une direction préférentielle par rapport à la direction de roulage du pneu. Cette inclinaison préférentielle des incisions conduit à avoir une bande de roulement dont le sens de rotation est prédéterminé (un moyen visible sur la bande de roulement ou sur le pneu pourvu de ladite bande de roulement permet à l'utilisateur de repérer le sens de montage impératif sur son véhicule afin d'obtenir l'amélioration souhaitée).

Le document WO94/21478 montre des incisions globalement non inclinées comportant chacune une succession de tronçons faisant respectivement un angle α et un angle β avec une perpendiculaire à la surface de roulement (ces angles étant de signes opposés et de valeurs absolues différentes).

Il est par ailleurs connu, US 5127455, d'incliner les incisions selon un angle au moins égal à 5 degrés et au plus égal à 45 degrés avec une direction perpendiculaire à la surface de roulement ; l'inclinaison est telle que la paroi de l'incision coupant la surface de roulement suivant l'arête de fuite (arête arrivant dans le contact après l'arête d'attaque située en vis-à-vis) est telle que l'angle que cette paroi fait avec la surface de roulement est inférieur à 90 degrés. Le document US-A-2002/166613 décrit les caractéristiques techniques du préambule de la revendication 1.

L'usage montre que dans les premiers kilomètres d'utilisation (avant le 1/3 d'usure de la bande de roulement), il pouvait se produire lors de manoeuvre de freinage sur chaussée sèche un phénomène d'usure localisée sur l'arête de fuite due en partie à un mécanisme de retournement de cette arête de fuite qui génère une usure prononcée sur ladite arête. Cette usure localisée a pour conséquence une réduction de la performance en freinage dans les premiers kilomètres d'utilisation.

La présente invention s'attache à décrire une solution apte à résoudre cet inconvénient apparaissant dans les premiers kilomètres de roulage ; selon l'invention il est proposé une bande de roulement directionnelle de pneu, c'est-à-dire ayant un sens de rotation prédéterminé et visualisé par exemple à l'aide d'un moyen visuel indiquant le sens de rotation. Cette bande a une surface de roulement destinée à être en contact avec la chaussée pendant le roulage et cette bande est pourvue d'une pluralité d'incisions délimitées par des parois situées en vis-à-vis, chacune desdites parois débouchant sur la surface de roulement pour former une arête dite arête d'attaque d'un élément de matière, correspondant à l'arête rentrant la première dans le contact, et une arête dite arête de fuite du même élément de matière, correspondant à l'arête rentrant dans le contact après l'arête d'attaque.

Lorsque la bande de roulement est en rotation dans le sens trigonométrique direct, chaque incision comprend au moins un tronçon délimité par des parois en vis-à-vis faisant, avec une direction perpendiculaire à la surface de roulement passant par l'intersection de l'incision avec la surface de roulement, un angle moyen α négatif inférieur en valeur absolue à 55 degrés.

Cette bande de roulement est caractérisée en ce que ce tronçon d'angle a négatif débouche sur la surface de roulement par une portion terminale délimitée par une première et une seconde faces en vis-à-vis l'une de l'autre, la première face de la portion terminale faisant un angle moyen A positif ou nul et inférieur en valeur à 55 degrés, la seconde face de la portion terminale faisant un angle moyen F positif et supérieur en valeur à 10 degrés.

Grâce à cette disposition sur la partie de l'incision qui débouche sur la surface de roulement, il est possible de contrôler la répartition des pressions de contact en manoeuvre de freinage sur sol sec et ainsi éviter tout retournement et basculement de l'arête de fuite.

L'angle F permet de maîtriser la répartition des pressions de contact sur le bord de fuite lors des manoeuvres de freinage ; cet angle permet en outre d'empêcher ou au moins limiter le retournement de l'arête de fuite. En condition de sollicitation sous couple moteur, c'est l'arête d'attaque qui est sollicitée.

Préférentiellement, l'angle A de l'arête d'attaque doit être, en valeur absolue, inférieur à 20 degrés pour que cette arête puisse rester efficace sur sol enneigé.

De cette manière, il est tout à la fois possible de maîtriser les répartitions des pressions entre la bande de roulement et la chaussée que la bande soit sollicitée en régime moteur (sous effort moteur) ou en régime freineur (sous effort freineur) grâce à une incision offrant, outre la possibilité d'un blocage approprié selon le régime de sollicitation, celle d'une performance optimale en évitant l'usure localisée sur l'arête de fuite.

Préférentiellement la partie terminale des incisions s'étend sur une hauteur He mesurée perpendiculairement à la surface de roulement, cette hauteur He étant comprise entre 5% et 20% de la profondeur H de l'incision.

Par ailleurs, pour limiter l'usure différentielle entre l'arête d'attaque et l'arête de fuite et donc obtenir une usure homogène sur toute la surface de roulement, la différence (F-A) doit être supérieure ou égale à 0 degré. Encore plus préférentiellement, cette différence (F-A) est supérieure à 10 degrés et inférieure à 45 degrés.

Cette disposition d'élargissement en extrémité d'incision est particulièrement adaptée au cas où ladite incision comprend une succession alternée de portions inclinées d'un angle moyen négatif α et de portions inclinées d'un angle moyen positif β. Ces angles α, et β pouvant être égaux en valeur absolue. Dans le cas où ces angles sont différents en valeur absolue, il est avantageux que l'angle α soit compris entre 5 degrés et 45 degrés et que l'angle β soit compris entre 45 degrés et 90 degrés.

Dans le cas de cette dernière incision et afin de bénéficier à plusieurs niveaux d'usure de la bande de roulement de l'effet anti retournement de l'arête de fuite, il est avantageux que l'angle F soit égal en valeur à l'angle β.

D'autres caractéristiques et avantages de l'invention ressortent de la description faite ci-après en référence aux dessins annexés qui montrent, à titre d'exemples non limitatifs, des formes de réalisation de l'objet de l'invention.

- les figures 1A et 1B explicitent les conventions de signes adoptées dans la présente description ;

- la figure 2 montre une première variante d'une incision selon l'invention, cette incision étant incliné d'un angle α ;

- la figure 3 montre une deuxième variante d'incision selon l'invention comprenant des tronçons inclinés d'un angle α et des tronçons inclinés d'un angle β ;

- la figure 4 montre une troisième variante d'incision selon l'invention.

Par convention, il a été choisi de conserver pour toutes les figures les mêmes signes de référence pour désigner des éléments identiques, quelle que soit la variante considérée.

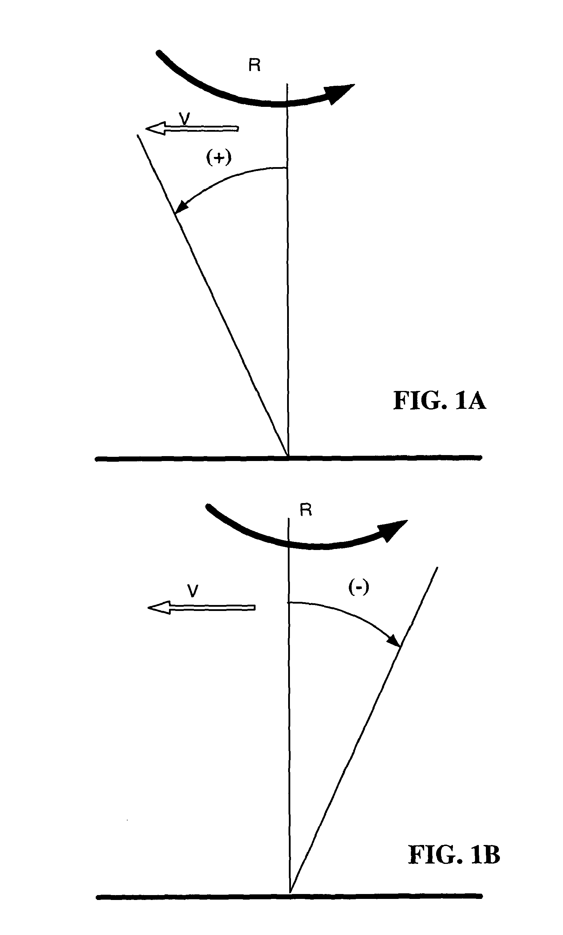

Règle de signes sur les angles : on définit dans la présente description la manière dont sont définis les angles des incisions : la surface de roulement étant positionnée au bas d'un dessin et la direction de déplacement du pneu se faisant de la droite vers la gauche du dessin, une direction est dite d'angle positif par rapport à une perpendiculaire à cette surface de roulement si la rotation qui amène la perpendiculaire sur cette direction se fait dans le sens trigonométrique direct (comme le montre la figure 1A).

A contrario une direction fait un angle négatif si la rotation qui amène la perpendiculaire sur cette direction se fait dans le sens trigonométrique inverse, c'est-à-dire dans le sens horaire (voir la figure 1B).

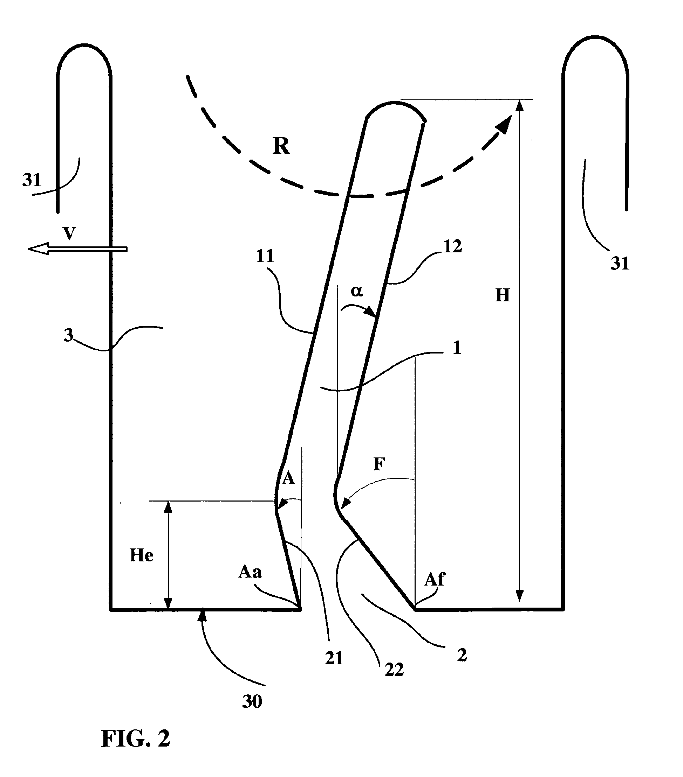

La figure 2 montre, en coupe selon un plan de coupe perpendiculaire à la surface de roulement et contenant la direction de roulage, une incision 1 formée dans une bande de roulement selon l'invention.

Sur cette figure 2, on distingue, vu en coupe, un bloc de gomme 3 délimité par des rainures 31, ce bloc 3 ayant une surface de roulement 30 à l'état initial (c'est-à-dire sur la bande de roulement neuve) sur laquelle débouche une incision 1 inclinée d'un angle moyen α avec une perpendiculaire à la surface de roulement. Cet angle est ici négatif et égal en valeur absolue à 20 degrés.

L'incision 1 est délimitée par deux parois planes 11 et 12 en vis-à-vis espacées d'une distance moyenne égale à 0,4 mm, ces parois 11 et 12 étant sensiblement parallèles entre elles.

La direction de roulage est indiquée par une flèche V (dirigée de la droite vers la gauche du dessin) et celle de rotation du pneumatique par une flèche R (direction dans le sens trigonométrique direct).

L'inclinaison α des parois de l'incision est telle que la partie la plus à l'extérieure de l'incision (c'est-à-dire la plus proche de la surface de roulement) est en avant par rapport à l'extrémité radialement à l'intérieur de la dite incision (en avant dans le sens du déplacement indiqué par la flèche V).

Cette incision 1, de profondeur H (mesurée perpendiculaire à la surface de roulement), comprend deux extrémités, une première extrémité radialement à l'intérieur, tandis qu'une deuxième extrémité radialement à l'extérieur est formée par un élargissement 2 de l'incision.

Cet élargissement 2 de hauteur He (mesurée perpendiculairement à la surface de roulement 30) est délimité par une première paroi 21 et une seconde paroi 22, les dites deux parois ayant dans le plan de la coupe des inclinaisons de signes opposés par rapport à l'inclinaison α de l'incision 1.

La première paroi 21 de l'élargissement 2 prolonge la paroi 11 de l'incision et coupe la surface de roulement 30 selon une arête dite arête d'attaque (Aa). La seconde paroi 22 de l'élargissement 2 prolonge la paroi 12 de l'incision et coupe la surface de roulement 30 selon une arête dite arête de fuite (Af).

L'angle A que fait la première paroi 21 avec une perpendiculaire à la surface de roulement 30 est positif et inférieur à 90 degrés ; dans l'exemple présenté cet angle A est égal à 10 degrés.

L'angle F que fait la deuxième paroi 22 avec une perpendiculaire à la surface de roulement 30 est positif et égal à 30 degrés.

La différence entre les angles A et F est égale à 20 degrés.

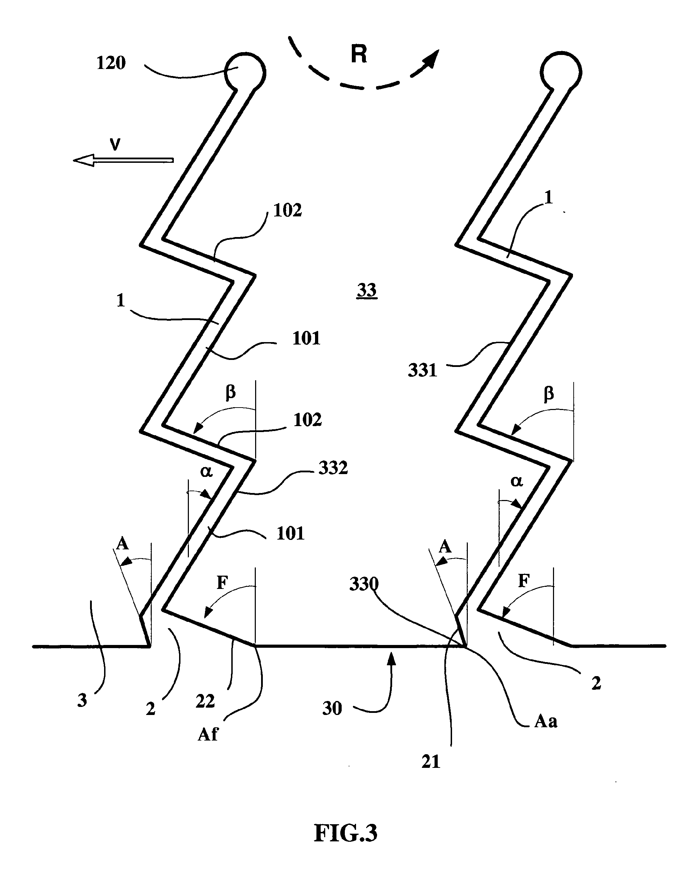

La figure 3 montre une autre variante de l'invention selon laquelle des incisions 1 pourvues d'un élargissement 2 débouchant sur la surface de roulement 30 d'un même bloc 3 d'une bande de roulement sont chacune formée par une succession de tronçons d'incision 101 inclinés d'un angle α et de tronçons d'incision 102 inclinés d'un angle β. Ces angles α et β sont de signes opposés (dans le cas présent, l'angle α est négatif et l'angle β est positif). Les incisions ont une largeur moyenne sensiblement constante sur tous les tronçons 101 et 102. Pour réduire les concentrations de contrainte en extrémité, chaque incision se termine à l'intérieur de la bande de roulement par une partie circulaire de diamètre supérieur à la largeur moyenne de l'incision.

Les incisions représentées isolent un élément de gomme 33 ayant une face latérale (dite face d'attaque) 331 coupant la surface de roulement 30 selon une arête d'attaque Aa et une face latérale (dite face de fuite) 332 coupant la surface de roulement 30 selon une arête de fuite Af.

Vues en coupe dans le plan de la figure 3, ces deux faces latérales 331 et 332 ont des profils identiques formés d'une succession de segments inclinés d'un angle α (-25 degrés) et de segments inclinés d'un angle β (+80 degrés).

Ces profils se distinguent l'un de l'autre en ce que la face d'attaque 331 se termine, vers l'extérieur de la bande de roulement, par une partie 21 coupant le plan de la figure selon un segment incliné d'un angle A positif (20 degrés), tandis que la face de fuite 332 se termine par une partie 22 coupant le plan de la figure selon un segment incliné d'un angle F positif supérieur en valeur absolue à celui de la face en vis-à-vis de manière à la fois à créer une pointe de gomme 330 avec la surface de roulement 30 et un élargissement 2 de l'incision près de la surface de roulement à l'état neuf. Cette pointe de gomme est particulièrement efficace en accélération. Chaque incision 1 se termine à l'intérieur de la bande de roulement par une partie élargie 120 évitant les concentrations de contraintes en extrémité.

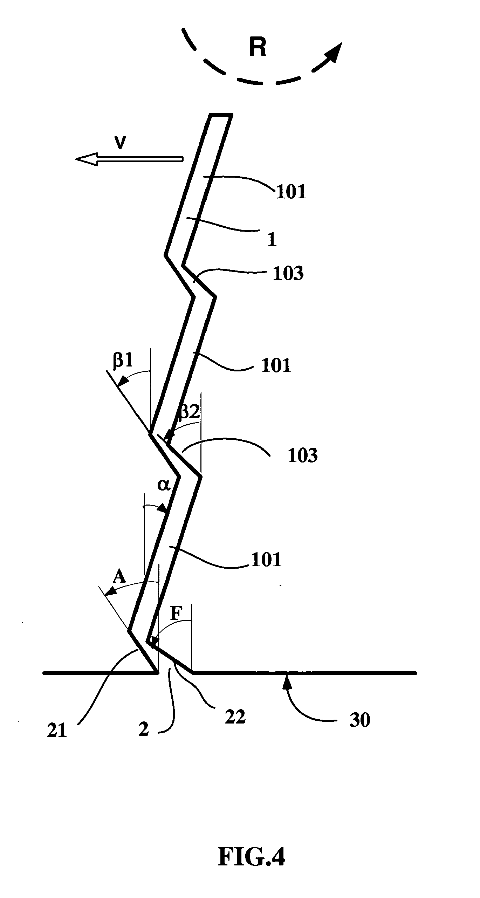

Dans une troisième variante d'incision selon l'invention, montrée avec la figure 4, l'incision 1 comprend plusieurs tronçons d'incision 101 d'inclinaison α, le tronçon 101 le plus proche de la surface de roulement 30 à l'état neuf se terminant par une portion terminale élargie 2 délimitée par une paroi 21 faisant un angle A et en vis-à-vis par une paroi 22 faisant un angle F. Entre deux tronçons 101 d'inclinaison α, il est disposé une partie intermédiaire 103 reproduisant sensiblement la forme de la portion terminale 2. Chaque partie intermédiaire est délimitée par une face faisant un angle β1 et une face en vis-à-vis faisant un angle β2. L'angle β1 est positif et inférieur à 20 degrés (dans le cas montré, de façon non limitative, cet angle est sensiblement égal à l'angle A). L'angle β2 est positif et supérieur à l'angle β1 (dans le cas montré, de façon non limitative, cet angle est sensiblement égal à l'angle F). L'avantage d'une telle incision est de retrouver la configuration de l'état initial à différents niveaux d'usure de la bande de roulement. Dans cette variante, la direction d'avancement est indiquée sur la figure 4 par la flèche V et la direction de rotation par la flèche R.

Dans une variante non représentée, l'incision selon l'invention comprend des moyens de blocage des déplacements des parois les unes par rapport aux autres (notamment sur les portions d'inclinaison moyenne α). Ces moyens de blocage peuvent par exemple être formés d'une pluralité d'ondulations de faible amplitude autour de cette direction moyenne.

Ayant montré et décrit certaines des variantes de l'invention, il n'est pas dans l'intention du déposant de limiter l'invention à ces seules variantes et par exemple si toutes les variantes décrites mettent en oeuvre des parois délimitant l'élargissement qui sont de géométrie plane, rien n'empêche la personne du métier d'adapter une forme non plane pour ces parois de l'élargissement.

## Revendications

1. Bande de roulement directionnelle de pneu, c'est-à-dire ayant un sens de rotation prédéterminé et visualisé à l'aide d'un moyen indiquant le sens de rotation (R), cette bande ayant une surface de roulement (30) destinée à être en contact avec la chaussée pendant le roulage, cette bande étant pourvue d'une pluralité d'incisions (1) délimitées par des parois (11, 12) situées en vis-à-vis, chacune desdites parois débouchant sur la surface de roulement (30) pour former une arête dite arête d'attaque (Aa) d'un élément de matière, correspondant à l'arête rentrant la première dans le contact, et une arête dite arête de fuite (Af) du même élément de matière, correspondant à l'arête rentrant dans le contact après l'arête d'attaque, chaque incision (1), de hauteur H mesurée perpendiculairement à la surface de roulement (30), comprenant au moins un tronçon (11, 101) délimité par des parois en vis-à-vis faisant, avec une direction perpendiculaire à la surface de roulement passant par l'intersection de l'incision avec la surface de roulement, un angle moyen négatif α inférieur en valeur absolue à 55 degrés,
cette bande de roulement étant **caractérisée en ce que** ce tronçon (11, 101) d'angle négatif α débouche sur la surface de roulement (30) par une portion terminale (2) délimitée par une première et une seconde faces (21, 22) en vis-à-vis l'une de l'autre,
• la première face (21) de la portion terminale (2) faisant, avec une perpendiculaire à la surface de roulement, un angle moyen A positif ou nul et inférieur en valeur à 55 degrés,
• la seconde face (22) de la portion terminale (2) faisant, avec une perpendiculaire à la surface de roulement, un angle moyen F positif et supérieur en valeur à 10 degrés.

2. Bande de roulement selon la revendication 1 **caractérisée en ce que** la différence (F-A) est supérieure ou égale à 0 degré.

3. Bande de roulement selon la revendication 2 **caractérisée en ce que** la différence (F-A) est supérieure à 10 degrés et inférieure à 45 degrés.

4. Bande de roulement selon l'une des revendications 1 à 3 **caractérisée en ce que** l'angle A est au plus égal à 20 degrés.

5. Bande de roulement selon l'une des revendications 1 à 4 **caractérisée en ce que** la portion terminale (2) de l'incision s'étend sur une hauteur He mesurée perpendiculairement à la surface de roulement, cette hauteur He étant comprise entre 5% et 20% de la profondeur H de l'incision.

6. Bande de roulement selon l'une des revendications 1 à 5 **caractérisée en ce que** chaque incision (1) comprend une succession de portions (101) inclinées d'un angle moyen négatif α et de portions (102) inclinées d'un angle moyen positif β.

7. Bande de roulement selon la revendication 6 **caractérisée en ce que** l'angle F est égal en valeur à l'angle β.

8. Bande de roulement selon l'une des revendications 1 à 5 **caractérisée en ce que** chaque incision comprend une pluralité de portions d'incision (101) inclinées d'un angle moyen négatif α, chacune desdites portions étant reliée à la suivante par une portion intermédiaire (103) délimitée par des faces non parallèles d'angles moyens β1 et β2.

9. Bande de roulement selon la revendication 8 **caractérisée en ce que** l'angle β1 est égal à l'angle A de la portion terminale de l'incision et **en ce que** l'angle β2 est égal à l'angle F de la portion terminale de l'incision.

## Claims

1. Directional tyre tread, that is a tread having a predetermined direction of rotation shown by a means indicating the direction of rotation (R), this tread having a rolling surface (30) designed to be in contact with the road surface during travel, this tread being provided with a plurality of incisions (1) bounded by mutually opposing walls (11, 12), each of said walls exiting the rolling surface (30) in such a way as to form an edge called the leading edge (Aa) of an element of material, corresponding to the edge that enters the contact patch first, and an edge called the trailing edge (Af) of the same element of material, corresponding to the edge that enters the contact patch after the leading edge, each incision (1), of height H measured perpendicular to the rolling surface (30), comprising at least one segment (11, 101) bounded by mutually opposing walls that make, with a direction perpendicular to the rolling surface passing through the intersection of the incision with the rolling surface, a negative average angle α whose absolute value is less than 55°,
this tread being **characterized in that** this segment (11, 101) of negative angle α exits the rolling surface (30) via an end portion (2) bounded by mutually opposing first and second faces (21, 22),
• the first face (21) of the end portion (2) making, with a perpendicular to the rolling surface, an average angle A that is positive or zero and less than 55°,
• the second face (22) of the end portion (2) making, with a perpendicular to the rolling surface, an average angle F that is positive and greater than 10°.

2. Tread according to Claim 1, **characterized in that** the difference (F-A) is greater than or equal to 0°.

3. Tread according to Claim 2, **characterized in that** the difference (F-A) is greater than 10° and less than 45°.

4. Tread according to one of Claims 1 to 3, **characterized in that** the angle A is less than or equal to 20°.

5. Tread according to one of Claims 1 to 4, **characterized in that** the end portion (2) of the incision has a height He measured at right angles to the rolling surface, this height He being between 5% and 20% of the depth H of the incision.

6. Tread according to one of Claims 1 to 5, **characterized in that** each incision (1) comprises a series of portions (101) inclined at a negative average angle α and portions (102) inclined at a positive average angle β.

7. Tread according to Claim 6, **characterized in that** the angle F is equal in value to the angle β.

8. Tread according to one of Claims 1 to 5, **characterized in that** each incision comprises a plurality of incision portions (101) inclined at a negative average angle α, each of said portions being connected to the next by an intermediate portion (103) bounded by non-parallel faces of average angles β1 and β2.

9. Tread according to Claim 8, **characterized in that** the angle β1 is equal to the angle A of the end portion of the incision and **in that** the angle β2 is equal to the angle F of the end portion of the incision.

## Patentansprüche

1. Direktionaler Laufstreifen eines Reifens, d.h., der eine Vorbestimmte Drehrichtung hat, die mit Hilfe einer die Drehrichtung (R) anzeigenden Einrichtung sichtbar gemacht wird, wobei dieser Streifen eine Lauffläche (30) hat, die dazu bestimmt ist, während des Fahrens mit der Straße in Kontakt zu stehen, wobei dieser Streifen mit einer Vielzahl von Einschnitten (1) versehen ist, die von einander gegenüberliegenden Wänden (11, 12) begrenzt werden, wobei jede der Wände an der Lauffläche (30) mündet, um eine so genannte Vorderkante (Aa) eines Materialelements, die der zuerst in den Kontakt kommenden Kante entspricht, und eine so genannte Hinterkante (Af) des gleichen Materialelements zu bilden, die der Kante entspricht, die nach der Vorderkante in den Kontakt kommt, wobei jeder Einschnitt (1), einer Höhe H gemessen lotrecht zur Lauffläche (30), mindestens einen Abschnitt (11, 101) enthält, der von einander gegenüberliegenden Wänden gebildet wird, die mit einer Richtung lotrecht zur Lauffläche, die durch den Schnittpunkt des Einschnitts mit der Lauffläche verläuft, einen mittleren negativen Winkel α im Absolutwert geringer als 55 Grad bilden,
wobei dieser Laufstreifen **dadurch gekennzeichnet ist, dass** dieser Abschnitt (11, 101) mit negativem Winkel α an der Lauffläche (30) durch einen Endteil (2) mündet, der von einer ersten und einer zweiten Seite (21, 22) begrenzt wird, die einander gegenüberliegen,
• wobei die erste Seite (21) des Endteils (2) mit einer Lotrechten zur Lauffläche einen mittleren Winkel A bildet, der positiv oder Null und im Wert kleiner als 55 Grad ist,
• wobei die zweite Seite (22) des Endteils (2) mit einer Lotrechten zur Lauffläche einen mittleren Winkel F bildet, der positiv und im Wert größer als 10 Grad ist.

2. Laufstreifen nach Anspruch 1, **dadurch gekennzeichnet, dass** die Differenz (F-A) größer als oder gleich 0 Grad ist.

3. Laufstreifen nach Anspruch 2, **dadurch gekennzeichnet, dass** die Differenz (F-A) größer als 10 Grad und kleiner als 45 Grad ist.

4. Laufstreifen nach einem der Ansprüche 1 bis 3, **dadurch gekennzeichnet, dass** der Winkel A höchstens gleich 20 Grad ist.

5. Laufstreifen nach einem der Ansprüche 1 bis 4, **dadurch gekennzeichnet, dass** der Endteil (2) des Einschnitts sich über eine Höhe He gemessen lotrecht zur Lauffläche erstreckt, wobei diese Höhe He zwischen 5% und 20% der Tiefe H des Einschnitts liegt.

6. Laufstreifen nach einem der Ansprüche 1 bis 5, **dadurch gekennzeichnet, dass** jeder Einschnitt (1) eine Folge von Teilen (101), die um einen negativen mittleren Winkel α geneigt sind, und von Teilen (102) enthält, die um einen positiven mittleren Winkel β geneigt sind.

7. Laufstreifen nach Anspruch 6, **dadurch gekennzeichnet, dass** der Winkel F im Wert gleich dem Winkel β ist.

8. Laufstreifen nach einem der Ansprüche 1 bis 5, **dadurch gekennzeichnet, dass** jeder Einschnitt eine Vielzahl von Einschnittteilen (101) enthält, die um einen negativen mittleren Winkel α geneigt sind, wobei jeder der Teile mit dem folgenden über einen Zwischenteil (103) verbunden ist, der von nicht parallelen Seiten mit mittleren Winkeln β1 und β2 begrenzt wird.

9. Laufstreifen nach Anspruch 8, **dadurch gekennzeichnet, dass** der Winkel β1 gleich dem Winkel A des Endteils des Einschnitts ist, und dass der Winkel β2 gleich dem Winkel F des Endteils des Einschnitts ist.
